# EUROPÄISCHE PATENTANMELDUNG

(11) **EP 1 239 613 A1**
(43) Veröffentlichungstag der Anmeldung: **11.09.2002**
(21) Anmeldenummer: 02360070.3
(22) Anmeldetag: 21.02.2002
(51) Int. Cl.: H04B 10/158, H04B 10/18

(54) **Dispersionskompensation von optischen Signalverzerrungen höherer Ordnung**

(30) Priorität: 07.03.2001 DE 10110853
(71) Anmelder: ALCATEL, 75008 Paris (FR)
(72) Erfinder: Bülow, Henning, 70806 Kornwestheim (DE)
(74) Vertreter: KOHLER SCHMID + PARTNER

(57) **Zusammenfassung**

Eine Vorrichtung und ein Verfahren zum Entzerren eines optischen Signals mit aufmodulierten Daten, wobei das optische Signal auf einer optischen Übertragungsstrecke durch Dispersionseffekte Verzerrungen erfahren hat, mit einem Dispersionskompensator, der das eingehende optische Signal derart bearbeitet, dass an seinem Ausgang ein optisches Signal oder ein elektrisches Signal mit den aufmodulierten Daten des Eingangssignals vorliegt, wobei das Ausgangssignal des Dispersionskompensators eine gegenüber dem Eingangssignal reduzierte Verzerrung aufweist, sind dadurch gekennzeichnet, dass dem Dispersionskompensator ein optisches Bandpassfilter vorgeschaltet ist, welches den Spektralbereich des eingehenden optischen Signals auf einen kleineren Spektralbereich begrenzt. So können mit ganz einfachen technischen Mitteln Verzerrungen optischer Signale in optischen Signalübermittlungssystemen aufgrund von Dispersionseffekten auch höherer Ordnungen zielgenau derart kompensiert werden, dass auch größere Verbindungslängen in den Übertragungswegen möglich werden und dass eine zuverlässigere Adaption an veränderliche Übertragungsbedingungen ermöglicht wird.

## Beschreibung

Die Erfindung betrifft ein Verfahren und eine Vorrichtung zum Entzerren eines optischen Signals mit aufmodulierten Daten, wobei das optische Signal auf einer optischen Übertragungsstrecke durch Dispersionseffekte Verzerrungen erfahren hat, mit einem Dispersionskompensator, der das eingehende optische Signal derart bearbeitet, dass an seinem Ausgang ein optisches Signal oder ein elektrisches Signal mit den aufmodulierten Daten des Eingangssignals vorliegt, wobei das Ausgangssignal des Dispersionskompensators eine gegenüber dem Eingangssignal reduzierte Verzerrung aufweist.

Derartige Verfahren und Vorrichtungen sind beispielsweise bekannt aus dem Konferenzbeitrag H. Bülow, "PMD mitigation techniques and their effectiveness in installed fiber", Techn. Dig. OFC 2000, ThH1, March 9,2000.

Zur Übertragung von Signalen insbesondere Datensignalen werden heute vielfach elektromagnetische Wellen im Frequenzbereich des sichtbaren Lichts verwendet. Dabei wird, wie aus der Hochfrequenztechnik im Radiowellenbereich an sich bekannt, einem Trägersignal ein Datensignal aufmoduliert. Auf der optischen Übertragungsstrecke, die in der Regel Spiegel, optische Fasern und andere dispersive Elemente umfasst, treten Verzerrungen des gesendeten optischen Signals auf, die zu einer Verfälschung oder Störung der übertragenen Daten führen können. Solche Verzerrungen rühren beispielsweise von einer chromatischen Dispersion oder auch von einer Polarisationsmodendispersion (=PMD) her.

Beispielsweise in Systemen mit 40G Kanalratenübertragung über mehrere hundert Kilometer Verbindungslängen sind bei Betreibern von optischen Kommunikationsnetzwerken schon heute schon sehr viele optische Fasern mit einer derart hohen PMD eingesetzt, dass eine Dispersionskompensation mit den eingangs beschriebenen Merkmalen unumgänglich ist. Diese wird in der Regel durch einen empfängerseitig im Übertragungsnetz installierten Dispersionskompensator realisiert.

So ist beispielsweise in einem Artikel von L. Möller, "Broadband PMD Compensation in WDM systems", proc. ECOC 2000, September 2000 ein PMD-Kompensator beschrieben, der empfangsseitig Verzerrungen aufgrund von PMD-Effekten zumindest teilweise kompensieren kann.

Mit diesen bekannten Kompensatoren lassen sich hierdurch bislang nur Effekte erster und bestenfalls niederer Ordnungen verarbeiten.

Einfache Anordnungen, wie sie z.B. in
F.Heismann et al., "Automatic compensation of first-order polarization mode dispersion in a 10 Gb/s transmission system", proc. ECOC'98, WdC11, 1998 und in
F.Roy et al., "A simple dynamic polarization mode dispersion compensator", Techn. Dig. OFC/IOOC'99, 1999,TuS4
beschrieben werden, kompensieren lediglich die PMD erster Ordnung. Damit lässt sich eine Faser-PMD von maximal etwa 35% der Bitdauer kompensieren. Dieser Wert (35ps für 10Gb/s) wird insbesondere bei 40Gb/s-Systemen zu klein sein, da er eine PMD von lediglich 8.8ps bedeutet.

Wird dieser PMD-Grenzwert überschritten, so treten auch Verzerrungen sogenannter höherer Ordnung auf. Erste Entzerreranordnungen für auch höhere PMD-Ordnungen sind z.B. in dem oben zitierten Artikel von L. Möller beschrieben. Zum einen ist ersichtlich, dass mit zunehmenden Ordnungen der Aufwand für die Signalprozessierung stark zunimmt und zum anderen ist eine hinreichend schnelle Adaption einer derartigen Anordnung mit vielen freien Parametern nicht sichergestellt.

Aufgabe der vorliegenden Erfindung ist es demgegenüber, ein Verfahren und eine Vorrichtung der eingangs beschriebenen Art mit möglichst einfachen Mitteln dahingehend weiterzubilden, dass Verzerrungen optischer Signale in optischen Signalübermittlungssystemen aufgrund von Dispersionseffekten auch höherer Ordnungen mit einem möglichst geringen technischen Aufwand zielgenau derart kompensiert werden können, dass auch größere Verbindungslängen in den Übertragungswegen möglich werden und dass eine zuverlässigere Adaption an veränderliche Übertragungsbedingungen ermöglicht wird.

Erfindungsgemäß wird diese Aufgabe auf ebenso überraschend einfache wie wirkungsvolle Art und Weise dadurch gelöst, dass dem Dispersionskompensator ein optisches Bandpassfilter vorgeschaltet ist, welches den Spektralbereich des eingehenden optischen Signals auf einen kleineren Spektralbereich begrenzt.

Das erfindungsgemäß dem Dispersionskompensator vorgeschaltete optische Bandpassfilter bietet dem Kompensator ein optisches Signal an, in welchem spektrale Komponenten, die Verzerrungen höherer Ordnungen erfahren haben, gezielt abgeschnitten werden können. Dadurch kann der technische Aufwand für den Dispersionskompensator bei gleicher Entzerrungsleistung erheblich reduziert werden. In adaptiven Entzerrungseinrichtungen kann die Adaptionszeit durch das vorgesehene Bandpassfilter wesentlich verkürzt werden.

Bei entsprechender Wahl des optischen Bandpassfilters kann sichergestellt werden, dass keine der dem übertragenen optischen Signal aufmodulierten Dateninformationen verloren gehen. Spektrale Komponenten hingegen, die durch Dispersionseffekte höherer Ordnung verzerrt sind, können damit hocheffizient ausgeblockt werden. Auf diese Weise können in optischen Informationsübertragungssystemen erheblich längere Glasfaserelemente bei 40G und darüber hinaus wegen der Dispersionskompensation höherer Ordnungen und der schnellen Adaptionsfähigkeit der Kompensationseinrichtung aufgrund des vorgefilterten Eingangssignals eingesetzt werden. Insbesondere ermöglicht die einfache optische Vorfilterung des eingehenden Signals vor der eigentlichen Dispersionskompensation eine Reduktion einer ansonsten erforderlichen komplizierten dynamischen Entzerrung höherer Ordnungen auf lediglich eine erste Ordnung oder zumindest auf eine Entzerrung niedrigerer Ordnungen.

Besonders bevorzugt ist eine Ausführungsform der erfindungsgemäßen Vorrichtung, bei der das optische Bandpassfilter ein Restseitenbandfilter ist, welches nur ein Seitenband und den Trägerteil des optischen Signals durchlässt. Dies ist insbesondere vorteilhaft bei der Verwendung von Standard-Dual-Seitenband-Spektren mit NRZ(= non-returned-to-zero)-Signalen. Das Ausgangssignal aus dem Restseitenbandfilter hat eine erheblich geringere optische Bandbreite, wobei die aufmodulierten Daten unbeeinflusst bleiben. Dadurch können Spektralanteile, die durch höhere Dispersionsmoden stark verzerrt sind, ohne Informationsverlust aus dem Signal herausgefiltert werden, was die anschließende Entzerrung im Dispersionskompensator erheblich erleichtert.

Bei einer bevorzugten Weiterbildung dieser Ausführungsform entspricht die Bandbreite des Restseitenbandfilters etwa der halben Bitrate der dem optischen Signal aufmodulierten Daten. Auf diese Weise wird der Einsatz einer minimalen Filterbandbreite ermöglicht, welche gerade noch keinen Informationsverlust oder eine Verzerrung des bearbeiteten optischen Signals hervorruft.

Bei Ausführungsformen der Erfindung kann der Dispersionskompensator Signalverzerrungen aufgrund chromatischer Dispersion kompensieren, wie beispielsweise an sich bekannt ist aus
B. J. Eggleton et al., "Tunable Dispersion Compensation in a 160 GB/S TDM System by Voltage Controlled Fiber Grating"
oder aus
S.T. Vohra et al., "Dynamic Dispersion Compensation Using Bandwidth Tunable Fiber Bragg Gratings", beide Artikel veröffentlicht in proc. ECOC 2000, vol.1, pp. 111-114, September 2000.

Insbesondere bei zukünftig angestrebten Datenraten von 160Gb/s und darüber führen chromatische Dispersionen höherer Ordnung (dispersion slope) zu einer merklichen Signaldegradation (siehe Eggleton et al.), die kompensiert werden müssen. Ebenfalls bewirken schon geringe Änderungen der Umgebungstemperatur eine Veränderung der Faserdispersion, so dass eine stetige adaptive Nachregelung des chromatischen Dispersionskompensators zwingend wird. Mit dem erfindungsgemäß vorgeschalteten Bandpassfilter können auch hier Verzerrungen aufgrund von Dispersionseffekten höherer Ordnungen mit einem sehr geringen technischen Aufwand kompensiert werden.

Besonders bevorzugt ist eine Ausführungsform der Erfindung, bei der der Dispersionskompensator ein PMD (=polarization mode dispersion)-Kompensator ist. Hierdurch kann eine Entzerrung von Polarisationseffekten bei der optischen Übertragung über lichtführende Medien, insbesondere optische Fasern geleistet werden. Ein derartiger PMD-Kompensator ist an sich aus dem oben zitierten Artikel von L. Möller bekannt.

Bei Weiterbildungen dieser Ausführungsform kann der PMD-Kompensator das optische Eingangssignal entzerren und als dispersionskompensiertes optisches Ausgangssignal zur Verfügung stellen. Die Kompensation erfolgt also ausschließlich mit optischen Mitteln.

Alternativ kann bei Weiterbildungen vorgesehen sein, dass der PMD-Kompensator das optische Eingangssignal detektiert, in ein elektrisches Signal umsetzt, dieses entzerrt und als dispersionskompensiertes elektrisches Ausgangssignal mit den aufmodulierten Daten des optischen Eingangssignals zur Verfügung stellt.

Denkbar ist aber auch der Einsatz eines Hybridkompensators, der einen Teil der Signalentzerrung am optischen Signal, einen anderen Teil am elektrischen Signal durchführt, wobei er als Ausgangssignal ein dispersionskompensiertes elektrisches Signal mit den aufmodulierten Daten des optischen Eingangssignals zur Verfügung stellt.

Bei einfachen Ausführungsformen der erfindungsgemäßen Vorrichtung ist der PMD-Kompensator einstufig aufgebaut, wie beispielsweise in F. Heismann et al., ECOC '98, pp. 529-530, Madrid 1998 beschrieben. Auch schon mit einem einfachen einstufigen Dispersionskompensator können durch das erfindungsgemäße Vorschalten eines optischen Bandpassfilters Verzerrungen aufgrund von Dispersionseffekten höherer Ordnung mit einfachen Mitteln kompensiert werden.

Bei komplexeren Ausführungsformen der erfindungsgemäßen Vorrichtung ist der PMD-Kompensator mehrstufig aufgebaut. Aufgrund der erfindungsgemäßen Vorgehensweise können bei gleichem technischen Aufwand im Kompensator Verzerrungen noch höherer Ordnungen im optischen Signal kompensiert werden.

Bei einer besonders bevorzugten Weiterbildung der mehrstufigen Ausführungsform umfasst mindestens eine Stufe des PMD-Kompensators eine Rückkoppelschleife, mit welcher die jeweilige Stufe so eingestellt wird, dass ein aus dem Ausgangssignal der entsprechenden Stufe gewonnenes Gütesignal optimiert wird. Auf diese Weise lassen sich erheblich kürzere Adaptionszeiten des Dispersionskompensators bei schnell wechselnden Dispersionsverzerrungen im Eingangssignal erreichen.

Eine weitere ganz erhebliche Verbesserung lässt sich erzielen, wenn in der Rückkoppelschleife zwischen dem Ausgangssignal der jeweiligen Stufe und einer Einrichtung zur Gewinnung des Gütesignals ein optisches Filter, insbesondere ein Bandpassfilter geschaltet ist. Durch die optische Vorfilterung im Rückkopplungskanal können auch Dispersionskompensatoren höherer Ordnung mit einer Vielzahl von ineinander geschalteten Stufen in ihrer Betriebsgeschwindigkeit und in ihrer Adaptionsfähigkeit erheblich verbessert beziehungsweise in ihrem technischen Aufbau besonders einfach gestaltet werden. Der Betrieb einer derart modifizierten erfindungsgemäßen Vorrichtung wird besonders zuverlässig, da die Rückkoppelsignale ganz selektiv auf spezifische Ordnungen der zu kompensierenden Verzerrungen eingerichtet werden können.

So kann in Weiterbildungen das zwischengeschaltete optische Filter der ersten Stufe mit einer gegenüber dem Signalspektrum schmaleren Bandbreite die inneren Teile des optischen Signalspektrums um den Trägerbereich herum durchlassen und die Seitenbänder herausfiltern, so dass die erste Stufe speziell auf die Rückgewinnung des spektralen Signalanteils erster Ordnung ausgelegt ist. Dies kann beispielsweise auch schon bei einem einstufigen Dispersionskompensator sinnvoll sein.

Besonders vorteilhaft bei mehrstufigen Dispersionskompensatoren ist eine Weiterbildung, bei der das zwischengeschaltete optische Filter der zweiten Stufe mit einer gegenüber dem Signalspektrum schmaleren Bandbreite die inneren Teile des optischen Signalspektrums um den Trägerbereich herum herausfiltert und nur die Seitenbänder durchlässt. Dadurch können speziell die Signalanteile mit Verzerrungen höherer Ordnungen bearbeitet werden.

Vorteilhaft ist auch eine Weiterbildung, bei der in mindestens einer Stufe in der Rückkoppelschleife eine Einrichtung zur Gewinnung des Gütesignals vorgesehen ist, die den Grad der Polarisation des Ausgangssignals der jeweiligen Stufe misst und einer Adaptionskontrolleinrichtung zur Verfügung stellt.

In den Rahmen der vorliegenden Erfindung fällt auch ein Verfahren zum Entzerren eines optischen Signals mit aufmodulierten Daten, wobei das optische Signal auf einer optischen Übertragungsstrecke durch Dispersionseffekte Verzerrungen erfahren hat, mittels eines Dispersionskompensators, der das eingehende optische Signal derart bearbeitet, dass an seinem Ausgang ein optisches Signal oder ein elektrisches Signal mit den aufmodulierten Daten des Eingangssignals vorliegt, wobei das Ausgangssignal des Dispersionskompensators eine gegenüber dem Eingangssignal reduzierte Verzerrung aufweist. Erfindungsgemäß zeichnet sich das Verfahren dadurch aus, dass vor der Dispersionskompensation der Spektralbereich des eingehenden optischen Signals mittels eines optischen Bandpassfilters auf einen kleineren Spektralbereich begrenzt wird.

Besonders vorteilhaft ist eine Variante des erfindungsgemäßen Verfahrens, die vorsieht, dass eine mehrstufige Kompensation von Verzerrungen des optischen Signals aufgrund der Polarisationsmodendispersion (=PMD) vorgenommen wird, wobei in aufeinanderfolgenden Stufen sukzessive höhere Ordnungen der PMD kompensiert werden, und dass in mindestens einer Stufe aus dem Ausgangssignal der Stufe ein Rückkoppelsignal abgegriffen wird, aus welchem ein Gütesignal gewonnen wird, mit dem die Signalkompensation der jeweiligen Stufe über eine Adaptionskontrolleinrichtung optimiert wird. Diese Art der Signalbehandlung in mehrstufigen Kompensatoren kann auch dann vorteilhaft angewendet werden, wenn vor der Dispersionskompensation keine Begrenzung des Spektralbereichs des eingehenden optischen Signals mittels eines optischen Bandpassfilters erfolgt.

Bei einer vorteilhaften Weiterbildung dieser Verfahrensvariante wird das Gütesignal unter Berücksichtung des Polarisationsgrades des Ausgangssignals der jeweiligen Stufe gewonnen, so dass in den verschiedenen Stufen unterschiedliche Ordnungen von PMD-Effekten bearbeitet werden können.

Bevorzugt ist auch eine Verfahrensvariante, bei der das abgegriffene Rückkoppelsignal vor der Gewinnung des Gütesignals einer optischen Filterung, insbesondere einer Bandpassfilterung unterzogen wird, so dass die oben beschriebene spezifische Bearbeitung niedrigerer und höherer Ordnungen in den einzelnen Stufen erfolgen kann.

Weiterhin fällt in den Rahmen der vorliegenden Erfindung auch eine Servereinheit, eine Prozessor-Baugruppe sowie eine Gate-Array-Baugruppe zur Unterstützung des oben beschriebenen erfindungsgemäßen Verfahrens sowie ein Computerprogramm zur Durchführung des Verfahrens. Das Verfahren kann sowohl als Hardwareschaltung, als auch in Form eines Computerprogramms realisiert werden. Heutzutage wird eine Software-Programmierung für leistungsstarke DSP's bevorzugt, da neue Erkenntnisse und Zusatzfunktionen leichter durch eine Veränderung der Software auf bestehender Hardwarebasis implementierbar sind. Verfahren können aber auch als Hardwarebausteine in Einrichtungen zur Signalübertragung, beispielsweise in einem IP (=Internet Protocol)-Netzwerk oder einer Telekommunikationsanlage implementiert werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig.1: ein Prinzipbild der Funktionsweise der erfindungsgemäßen Vorrichtung;
- Fig.2a: ein Schema für eine mögliche optische Bandpassfilterung in einem RZ-Signalspektrum;
- Fig.2b: eine VSB-Filterung in einem NRZ-Signalspektrum;
- Fig.3: ein Prinzipbild der Funktionsweise einer Anordnung mit mehrstufigem PMD-Kompensator;
- Fig.4a: ein Beispiel für eine Signalbearbeitung in der ersten Stufe einer Rückkoppelschleife mit Durchlass des Trägerbereichs des Signalspektrums und Herausfiltern der Seitenbänder; und
- Fig.4b: die Signalbearbeitung in einer weiteren Stufe mit Herausfiltern des Trägerbereichs des Signalspektrums und Durchlassen der Seitenbänder.

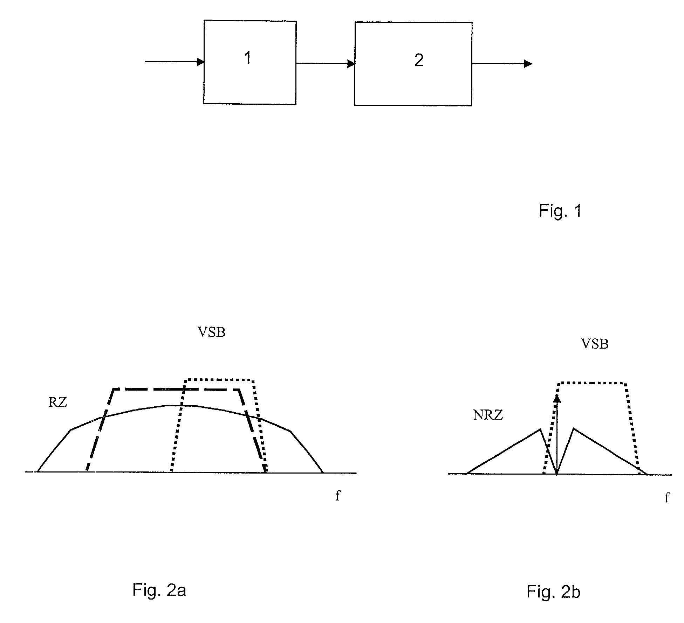

In Fig. 1 ist eine erfindungsgemäße Vorrichtung zur Kompensation von Dispersionseffekten höherer Ordnungen in einem optischen Signal dargestellt. Die Grundanordnung umfasst im einfachsten Fall ein optisches Bandpassfilter 1, in welchem ein eingehendes optisches Signal mit aufmodulierter Signalinformation auf einen kleineren spektralen Bereich als dem ursprünglichen begrenzt wird. Diesem nachgeschaltet ist ein Dispersionskompensator 2, in welchem Verzerrungen des optischen Signals aufgrund von Dispersionseffekten auf der optischen Übertragungsstrecke reduziert bzw. so weit wie möglich beseitigt werden. Der Dispersionskompensator 2 kann dabei entweder optisch oder elektrisch oder auf Hybridbasis arbeiten.

Bei den meisten Modulationsformaten, wie beispielsweise NRZ (=non-returnedto-zero) oder RZ (=returned-to-zero) ist das optische Spektrum breiter als die erforderliche Bandbreite für eine fehlerfreie Signaldetektion (Bandbreite ≅ Bitrate/2). Der Grundgedanke der vorliegenden Erfindung besteht nun darin, dass das optische Bandpassfilter 1 die nicht benötigten Anteile aus dem optischen Signalspektrum herausfiltert und damit "äußere" spektrale Komponenten ausblockt, die von Dispersionseffekten höherer Ordnungen eine größere Verzerrung erfahren haben. Auf diese Weise muss der Dispersionskompensator nur noch mit Verzerrungen aufgrund von Dispersionseffekten der ersten und niedrigerer Ordnungen fertig werden, was den erforderlichen Komplexitätsgrad des Kompensators bei gleicher Qualität des Ausgangsignals sehr weitgehend reduziert.

In Fig. 2a ist schematisch ein RZ-Signalspektrum über der optischen Frequenz f dargestellt, bei dem einerseits ein symmetrisch zum Trägerteil des Signalspektrums angeordnetes NRZ-Filter, andererseits ein schmaleres und asymmetrisch angeordnetes VSB-Filter eingesetzt wird.

Bei dem in Fig. 2b schematisch dargestellten NRZ-Signalspektrum kann durch ein asymmetrisch relativ zur Mittenfrequenz positioniertes VSB-Filter der Trägerteil und ein den sämtlichen relevanten Rest der zu übertragenden Signalinformation aufweisender Seitenbandteil herausgefiltert werden.

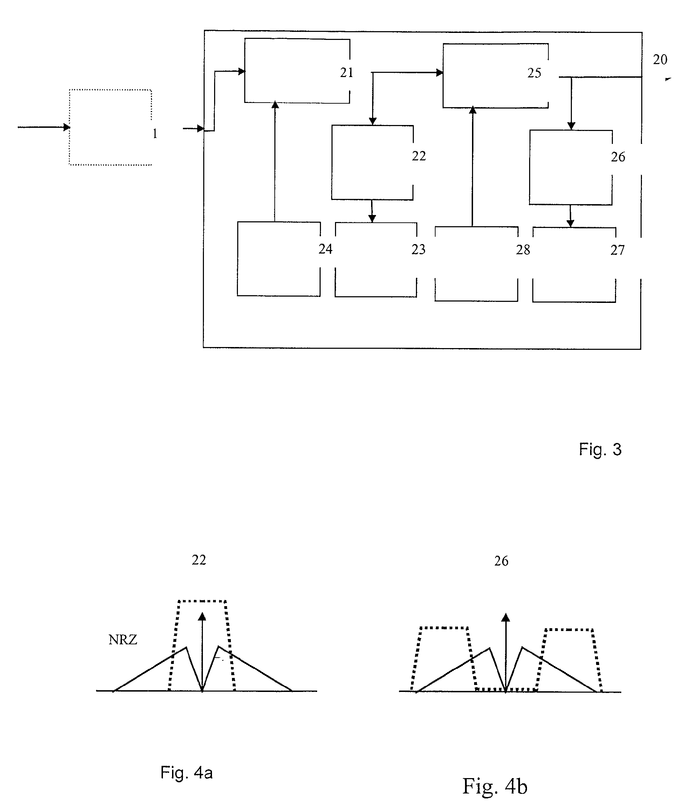

Falls die Verzerrungen aufgrund von Dispersionseffekten, insbesondere PMD einen spezifischen Wert überschreiten, reicht für eine zufriedenstellende Signalbearbeitung die optische Vorfilterung im optischen Bandpassfilter 1 möglicherweise nicht aus. In diesem Fall muss der in Fig. 1 gezeigte Dispersionskompensator 2 modifiziert werden. Eine bevorzugte Weiterbildung ist in Fig. 3 gezeigt, wo die erfindungsgemäße Anordnung einen zweistufigen PMD-Kompensator 20 umfasst. Allgemein können auch noch höherstufige Dispersionskompensatoren eingesetzt werden, die auch Verzerrungen aufgrund von Dispersionseffekten noch höherer Ordnungen glätten können.

Weiterhin zeigt die Anordnung nach Fig. 3 schematisch die Verwendung von Rückkopplungsschleifen in den einzelnen Stufen des mehrstufigen Dispersionskompensators 20. Im Prinzip kann eine derartige Rückkopplungsschleife aber auch bei einem einstufigen Kompensator von Vorteil sein.

Im einzelnen besteht die erste Stufe des zweistufigen Dispersionskompensators 20 aus einem Dispersionskompensator 21 für eine erste Ordnung, aus dessen Ausgangssignal ein Rückkopplungssignal abgegriffen wird, welches zunächst in einem ersten optischen Filter 22 einer optischen Bandpassfilterung unterzogen wird. Das Rückkopplungsfilter 22 lässt im wesentlichen nur spektrale Komponenten um das Zentrum des Signalspektrums mit dem Trägeranteil durch, welcher im wesentlichen durch Dispersionseffekte erster Ordnung verzerrt ist. Die Seitenbänder werden symmetrisch zur Mittenfrequenz des Signalspektrums abgeschnitten, wie in Fig. 4a angedeutet. Damit muss die erste Stufe des Dispersionskompensators 20 lediglich auf Verzerrungen erster Ordnung im optischen Signal reagieren und der Rückkoppelkontrast wird nicht verwässert durch zusätzliche Verzerrungen höherer Ordnungen. Auf diese Weise kann auch die Bandbreite des ersten optischen Filters 22 um einiges geringer gewählt werden als beispielsweise die für die Signalvorfilterung im optischen Bandpassfilter 1 erforderliche Bandbreite.

Das gefilterte optische Signal der ersten Kompensationsstufe wird nun einer Einrichtung 23 zur Gewinnung eines Gütesignals zugeführt, in welcher insbesondere bei PMD-Kompensatoren der Grad der Polarisation des Ausgangssignals aus dem ersten Dispersionskompensator 21 gemessen wird. Das Ausgangssignal aus der Einrichtung 23 wird nun einer Adaptionskontrolleinrichtung 24 zur Verfügung gestellt, welche ihrerseits die Rückkopplungsschleife schließt und mit ihrem Ausgangssignal auf den ersten Dispersionskompensator 21 so einwirkt, dass dessen Ausgangssignal nach vorgebbaren Kriterien optimiert wird.

In ähnlicher Weise arbeitet die zweite Stufe des Dispersionskompensators 20, die einen zweiten Dispersionskompensator 25, ein zweites optisches Filter 26, eine zweite Einrichtung 27 zur Gewinnung eines Gütesignals sowie eine zweite Adaptionskontrolleinrichtung 28 umfasst.

Im Unterschied zur ersten Stufe sollen allerdings in der zweiten (und eventuell nachfolgenden Stufen) Verzerrungen aufgrund von Dispersionseffekten zweiter und höherer Ordnung aus dem optischen Signal entfernt werden. Dazu wird, wie in Fig. 4b angedeutet, im zweiten optischen Filter 26 der Frequenzbereich um den zentralen Trägerteil des Spektrums ausgefiltert und lediglich Frequenzkomponenten durchgelassen, die die äußeren Teile des Spektrums umfassen und von Verzerrungen höherer Ordnung befallen sind. Auf diese Weise kann ein für die zweite (und eventuell höhere) Stufe spezifisches Rückkoppelsignal gebildet werden, mit dem der zweite Dispersionskompensator 25 (oder ein Kompensator in einer höheren Stufe) in seinem Betriebsverhalten zum Glätten von Verzerrungen entsprechend höherer Ordnungen optimiert wird.

Von diesem Prinzip kann im übrigen erfolgreich auch ohne Vorschaltung des optischen Bandpassfilters 1 vor den mehrstufigen Dispersionskompensator 20 Gebrauch gemacht werden.

## Patentansprüche

1. Vorrichtung zum Entzerren eines optischen Signals mit aufmodulierten Daten, wobei das optische Signal auf einer optischen Übertragungsstrecke durch Dispersionseffekte Verzerrungen erfahren hat, mit einem Dispersionskompensator, der das eingehende optische Signal derart bearbeitet, dass an seinem Ausgang ein optisches Signal oder ein elektrisches Signal mit den aufmodulierten Daten des Eingangssignals vorliegt, wobei das Ausgangssignal des Dispersionskompensators eine gegenüber dem Eingangssignal reduzierte Verzerrung aufweist,
**dadurch gekennzeichnet,**
**dass** dem Dispersionskompensator ein optisches Bandpassfilter vorgeschaltet ist, welches den Spektralbereich des eingehenden optischen Signals auf einen kleineren Spektralbereich begrenzt.

2. Vorrichtung nach Anspruch 1, **dadurch gekennzeichnet, dass** das optische Bandpassfilter in Restseitenbandfilter ist, welches nur ein Seitenband und den Trägerteil des optischen Signals durchlässt.

3. Vorrichtung nach Anspruch 1 **dadurch gekennzeichnet, dass** die Bandbreite des Restseitenbandfilters etwa der halben Bitrate der dem optischen Signal aufmodulierten Daten entspricht.

4. Vorrichtung nach Anspruch 1, **dadurch gekennzeichnet, dass** der Dispersionskompensator Signalverzerrungen aufgrund von chromatischer Dispersion kompensieren kann.

5. Vorrichtung nach Anspruch 1, **dadurch gekennzeichnet, dass** der Dispersionskompensator ein PMD (=polarization mode dispersion)-Kompensator ist.

6. Vorrichtung nach Anspruch 5, **dadurch gekennzeichnet, dass** der PMD-Kompensator das optische Eingangssignal detektiert, in ein elektrisches Signal umsetzt, dieses entzerrt und als dispersionskompensiertes elektrisches Ausgangssignal mit den aufmodulierten Daten des optischen Eingangssignals zur Verfügung stellt.

7. Vorrichtung nach Anspruch 5, **dadurch gekennzeichnet, dass** der PMD-Kompensator ein Hybridkompensator ist, der einen Teil der Signalentzerrung am optischen Signal, einen anderen Teil am elektrischen Signal durchführt, wobei er als Ausgangssignal ein dispersionskompensiertes elektrisches Signal mit den aufmodulierten Daten des optischen Eingangssignals zur Verfügung stellt.

8. Vorrichtung nach Anspruch 5, **dadurch gekennzeichnet, dass** mindestens eine Stufe des PMD-Kompensators (20) eine Rückkoppelschleife umfasst, mit welcher die jeweilige Stufe so eingestellt wird, dass ein aus dem Ausgangssignal der entsprechenden Stufe gewonnenes Gütesignal optimiert wird.

9. Vorrichtung nach Anspruch 8, **dadurch gekennzeichnet, dass** in der Rückkoppelschleife zwischen dem Ausgangssignal der jeweiligen Stufe und einer Einrichtung zur Gewinnung des Gütesignals ein optisches Filter (22, 26), insbesondere ein Bandpassfilter geschaltet ist.

10. Vorrichtung nach Anspruch 9, **dadurch gekennzeichnet, dass** das zwischengeschaltete optische Filter (22) der ersten Stufe mit einer gegenüber dem Signalspektrum schmaleren Bandbreite die inneren Teile des optischen Signalspektrums um den Trägerbereich herum durchlässt und die Seitenbänder herausfiltert.

11. Vorrichtung nach Anspruch 9, **dadurch gekennzeichnet, dass** das zwischengeschaltete optische Filter (26) der zweiten Stufe mit einer gegenüber dem Signalspektrum schmaleren Bandbreite die inneren Teile des optischen Signalspektrums um den Trägerbereich herum herausfiltert und nur die Seitenbänder durchlässt.

12. Verfahren zum Entzerren eines optischen Signals mit aufmodulierten Daten, wobei das optische Signal auf einer optischen Übertragungsstrecke durch Dispersionseffekte Verzerrungen erfahren hat, mittels eines Dispersionskompensators (2), der das eingehende optische Signal derart bearbeitet, dass an seinem Ausgang ein optisches Signal oder ein elektrisches Signal mit den aufmodulierten Daten des Eingangssignals vorliegt, wobei das Ausgangssignal des Dispersionskompensators (2) eine gegenüber dem Eingangssignal reduzierte Verzerrung aufweist,
**dadurch gekennzeichnet,**
**dass** vor der Dispersionskompensation der Spektralbereich des eingehenden optischen Signals mittels eines optischen Bandpassfilters (1) auf einen kleineren Spektralbereich begrenzt wird.

13. Verfahren nach Anspruch 18, **dadurch gekennzeichnet, dass** eine mehrstufige Kompensation von Verzerrungen des optischen Signals aufgrund der Polarisationsmodendispersion (=PMD) vorgenommen wird, wobei in aufeinanderfolgenden Stufen sukzessive höhere Ordnungen der PMD kompensiert werden, und dass in mindestens einer Stufe aus dem Ausgangssignal der Stufe ein Rückkoppelsignal abgegriffen wird, aus welchem ein Gütesignal gewonnen wird, mit dem die Signalkompensation der jeweiligen Stufe über eine Adaptionskontrolleinrichtung (24, 28) optimiert wird.

14. Verfahren nach Anspruch 13, **dadurch gekennzeichnet, dass** das Gütesignal unter Berücksichtung des Polarisationsgrades des Ausgangssignals der jeweiligen Stufe gewonnen wird.

15. Verfahren nach Anspruch 13 oder 14, **dadurch gekennzeichnet, dass** das abgegriffene Rückkoppelsignal vor der Gewinnung des Gütesignals einer optischen Filterung, insbesondere einer Bandpassfilterung unterzogen wird.

16. Prozessorbaugruppe, insbesondere digitaler Signalprozessor (=DSP) zur Unterstützung des Verfahrens nach Anspruch 13.

17. Programmierbare Gate-Array-Baugruppe zur Unterstützung des Verfahrens nach eine der Anspruch 13.

18. Computerprogramm zur Durchführung des Verfahrens nach Anspruch 13.
